# EUROPEAN PATENT APPLICATION

(11) **EP 3 689 477 A1**
(43) Date of publication of application: **05.08.2020**
(21) Application number: 18862392.0
(22) Date of filing: 28.08.2018
(51) Int. Cl.: B05D 3/10, B29C 63/48

(54) **FORMULATION FOR MORDANTING POLYMERIC MATERIALS PRIOR TO COATING SAME**

(30) Priority: 28.09.2017 ES 201731155
(71) Applicant: Avanzare Innovacion Tencologica S.L., 26370 Navarette (ES); SRG Global Liria, S.L., 46160 Liria Valencia (ES)
(72) Inventor: GOMEZ CORDON, Julio, 26003 Logroño (ES); PEREZ MARTINEZ, Javier, 26140 Lardero (ES); OTAÑO JIMENEZ, Luis, 26004 Logroño (ES)
(74) Representative: Hoyng Rokh Monegier LLP
(86) International application number: PCT/ES2018/070575
(87) International publication number: WO 2019/063859

(57) **Abstract**

This invention refers to a new formulation of etching treatment baths of polymers prior to the metallization or coating of the polymer using technologies known and described in the prior art, based in the use of salts and/or complexes of the cation Cr (III). The formulation of this invention involves a Cr (III) salt and/or complex in which Cr (III) is coordinated to at least one or several mono, bi, tri, tetra, penta, hexadentate or bridging ligands that coordinate to the chromium through the oxygen, sulfur or nitrogen atom or several of these atoms to ligands. Once the polymeric piece is etched with the etching formulation described above, the metallic coating is applied through chemical and plating baths in the case of metallization, or through paint or another organic coating.

## Description

This invention refers to etching treatment baths of polymers prior to the metallization or coating of the polymer using technologies known and described in the prior art, based on the use of salts and/or complexes of the cation Cr (III).

### BACKGROUND OF THE INVENTION

Currently, the technological development and industrial applications of pretreatment baths, treatment and etching of polymers, mainly ABS and its blends such as ABS-Polycarbonate, Polyamide, Polypropylene and thermostables, with or without the addition of inorganic loads and other additives in the polymer dough, is based on the use of aqueous baths that contain chromium salts in oxidation state VI. The baths generally contain sulfuric acid and a chromium (VI) compound, mainly chromic acid, chromium trioxide or dichromates in concentrations of up to 400 gr/l.

This surface treatment process or etching is the initial key treatment and then a system of multiple functional layers of activation, acceleration, deposition of electroless nickel, copper, copper electrodeposition, nickel and even chrome finish are applied, with their corresponding intermediate washes, which results in a plastic metallized on its surface.

With organic or painted coating, after the initial key process of etching surface treatment described above, the plastic is coated or painted using one of the different methods currently available in the prior art.

Only the combination of an appropriate pretreatment or etching and some further ideal treatments provide all the key necessary requirements for the respective applications needed, and the initial etching treatment is the essential factor of the entire process.

The chromium salts in oxidation state VI used in etching have been proven to be toxic and carcinogenic to human beings, which has led to an interest in substituting any use of these chromium (VI) salts and specifically their use in polymer treatment and etching baths.

Different options have been proposed for the substitution of baths containing Cr salts (VI) for other chemical oxidants, mainly salts of Mn (VII), Mn (VI) and even salts of Mn (III) in both acid and base mediums, as shown in patents US8603352B1 and US20130186774.

However, these systems based on Mn salts do not produce the same adhesion results in the metallization or later coating of the pieces of polymer and need very complex washing due to the need to remove the reduction products of the Mn salts. The baths are also unstable over time and last a short time for industrial applications.

Alternatively, systems based on hydrogen peroxide have been proposed like in patent DE19740431C1, peroxides and salts of iron and/or copper like in US6559242B1, anionic complexes with a chloride ligand of transition metals (US4568571A), organometallic compounds of transition metals in organic solvent (EP0081129A1), and salts of chlorides or nitrates of transition metals without the use of complexes in slightly acid aqueous medium (US20070099425A1).

In no case in the present day have results been obtained that are applicable to the final adhesion requirements demanded by the automation sector among others, which can be obtained through treatments based on Cr (VI) salts. A review article was recently published on this topic: Plating on acrylonitrile-butadiene-styrene (ABS) plastic: A review. Journal of Materials Science 2016, 51, 3657-3674. Therefore, there is a need in the prior art for etching baths that are efficient in terms of the adhesion results of metallization or coating of other kinds on the polymer, stability of the bath over time and use, safety characteristics, non-toxicity for people and the environment, ease of recovery, recycling or removal in environmentally appropriate conditions of those treatment baths and without Cr (VI).

### INVENTION PURPOSE

The purpose of this invention is the pretreatment, treatment and/or etching of polymers through the use of aqueous solutions that contain salts and/or chromium (III) complexes in an acid medium.

The invention is based on using the cation Cr (III) added like a salt and chemically coordinated to at least one or several mono, bi, tri, tetra, penta, hexadentate or bridging ligands that coordinate to the chromium through the oxygen, sulfur or nitrogen atom.

The treatment is applied to organic polymers in order to modify their surface both physically and chemically, so that on the surface of the polymer it is possible to make a coating that adheres or can be metallized through technologies currently described in the prior art.

### DESCRIPTION

The coating of polymers with metals through chemical baths or with organic coatings requires a prior etching treatment so the surface of the polymer to be coated is adherent enough to meet the application requirements of the final product.

The polymers this etching treatment process is used on are thermoplastics like ABS, ABS blends with other polymers such as polycarbonate, polyamide, PVC, polycarbonate, polyesters, polyacetal, polyolefins, thermostables such as epoxy resins, unsaturated polyester resins, vinyl ester epoxy resins or elastomers such as SBR and EPDM rubbers or thermoplastic elastomers of the different types available on the market. The polymers may contain different types of inorganic loads such as quartz, calcium carbonate, wollastonite, silicates, talc and the corresponding additives necessary for their processing by extrusion, injection, molding on hot plates, or the different techniques used to manufacture objects, plates or forms in thermostables or elastomers.

The polymer surface treatment or etching process is a process that has some prior requirements, such as certain compositions of the treatment or etching baths and the action or treatment of these baths with controlled temperatures and times.

### Prerequisites of the etching process:

The surface of the substrate to be treated initially should be free of contaminants, greases, corrosive products and other materials. Therefore, appropriate preparation of the base substrate is a recommendable requirement prior to the process, though it is not strictly necessary. Prior preparation of the substrate is well-known in the prior art.

The compositions of the baths to be used in the etching process are aqueous baths:
The baths are prepared by adding salts or chromium (III) complexes and are based on the use of at least one or several mono, bi, tri, tetra, penta, hexadentate or bridging ligands that coordinate to the chromium through the oxygen, sulfur or nitrogen atom of the ligand.

Among others, the ligands that can be used for chromium in oxidation state (III) are formate, acetate, propanoate, butanoate, benzoate, phenyl acetate, phenyl propionate, cyanamate, alkyl benzoate, pyruvate, levulinate, citrate, isocitrate, aconitate, trimellitate, glycinate, valinate, leucinate, treoninate, lysinate, tryptophanate, histidinate, phenyl alaninate, isoleucinate, argininate, metioninate, alaninate, prolinate, serinate, cysteinate, asparaginate, glutaminate, tyrosinate, aspartate, polyaspartate, glutamate, cysteinate, homocysteinate, ornitinate, nicotinate, oxalate, propanedioate, butanedioate, pentanedioate, hexanedioate, maleate, fumarate, phthalate, isophthalate, terephthalate, tartrate, itaconate, mesaconate, citraconate, glycolate, lactate, mandelate, salicylate, gluconate, ethylenediaminetetracetate, nitrilotriacetate, iminodisuccinate, ethylenodiamine disuccinate, methylglycinediacetate, N,N, glutamate diacetate, cyclohexylenedinitrilotetraacetate, diethylenotriamainapentaacetate, aminoethylethylenglicoltetraacetate, tryethylentetraminahexaacetate, dihydroxiethylglycinate, iminodiacetate, oxamate, nitrilotripropionate, ethylenodiaminedipropionate, thiodipropionate, dithiodipropionate, aminopropanoate, aminopentanoate, aminohexanoate, 2-aminobenzoate, 3-aminobenzoate, 4-aminobenzoate, 3-cyclohexilamine-propylamine, ethylenodiamine, 1,3-diaminopropane, dimethylaminopropilamine, diethylaminopropilamine, bis(3-aminopropyl)-methylamine, diethylenotriamine, dipropylenotraimine, triethylenetetramine, tetraethylenopentamine, polyamines, 3-(2-aminoethyl)amino-propilamine, N,N'-bis(3-aminopropyl)ethylenodiamine, neopentante diamine, cyclohexanodiamine, hexano-1,6-diamine, imidazole, 1-methylimidazole, 2-methylimidazole, 1,2-dimethylimidazole, 2-ethylimidazole, 2-ethyl-4-methyl-imidazole, N-(3-Aminopropyl)-imidazole, pyrazole, nicyanamide, bipyridine, phenanthroline or their blends.

The ligands used are preferably formate, acetate, propionate, glycinate, argininate, aspartate, polyaspartate, glutamate, nicotinate, oxalate, propanedioate, butanedioate, pentanedioate, hexanedioate, maleate, fumarate, phthalate, salicylate, tartrate, citrate, glycolate, lactate, gluconate, ethylenediaminetetracetate, nitrilotriacetate, 2-aminobenzoate. The ligands used the most are preferably oxalate, propanedioate, butanedioate, maleate, fumarate, phthalate, glycolate, lactate, salicylate, glycinate, glutamate or their blends.

The chromium (III) complexes contained in the bath can be added to the bath in the form of a prepared and isolated chromium (III) complex with the ligands above, as indicated in the scientific literature, for example, for oxalate type complexes in "Complex Ions of Chromium. III. Reactions between Hexaquochromium(III) and Oxalate Ions", Randall E. Hamm, Robert E. Davis J. Am. Chem. Soc., 1953, 75, pp 3085-3089 (1953).

Cr (III) complexes can also be formed in situ in the bath through the separate addition of a chromium (III) salt and of the ligand that will make up the required complex as is indicated, for example, for fumarate type complexes in patent US3900689.

In the case of the in situ formation of the chromium (III) complex, the starting salts of these complexes can be inorganic anion or organic anion salts such as chloride, bromide, perchlorate, hydroxide, oxides, sulphate, sulfite, sulfide, nitrate, nitrite, phosphate, diphosphate, metaphosphates, polyphosphates, borate, silicate, formate, acetate, benzoate, lactate, methanesulphonate, ethanesulphonate, propanesulphonate, butanesulphonate, carboxylates, alkyl phosphates or their blends. Once these salts are added to the aqueous bath, to this bath the corresponding ligands in their protonated form or in the form of salt of alkaline or alkali earth metals or free form are added to this bath, in order to form the complex. This way, the chromium (III) complex needed in the etching bath is obtained.

Finally, it is also possible to obtain the Cr (III) complex needed in the etching bath through a chemical reaction or a reduced form of the ligand to be used and the addition to the bath of a Cr (VI) compound, which is reduced to a complex in oxidation state (III) either through the direct action of the ligand with which the complex is to be formed if it is a reducing agent or by adding a different reducing agent to the ligand such as ascorbic acid, ascorbates, thiosulfates, sulfites, sulfides, nitrites, phosphites, hypophosphites, formaldehyde sulphoxilates, dithionites, oxalates, carboxylates of alkaline or alkali earth metals, hydrazine and its derivatives, hydroxylamine, or any other reducing agent known in the prior art.

The concentration of Cr (III) complex present in the bath may be between 2 mM and 2 M and more preferably between 5 mM and 1 M, and even more preferably between 0.01 M and 0.4 M. The Cr (III) complexes indicated are used in an acid aqueous medium and the acids contained in the etching bath can be sulfuric acid, aminosulfuric (sulfamic) acid, phosphoric acid, diphosphoric acid, metaphosphoric acid, polyphosphoric acid, methanesulfonic acid, ethanesulfonic acid, propanesulfonic acid, butanesulfonic acid, alkanesulfonic acids, benzenesulfonic acid, toluenesulfonic acid, cumenesulfonic acid, alkyl benzenesulfonic acids, monoalkyl phosphoric acids, dialkyl phosphoric acids, isethionic acid, perchloric acid, chloric acid, nitric acid, tryfluorometasulfonic acid, trifluoracetic acid, tetrafluoroboric acid, hexafluorophosphoric acid, hexafluorosilicic acid, hydrogen fluoride acid, boric acid or their blends. Preferably the acids present in the etching bath can be sulfuric acid, phosphoric acid, diphosphoric acid, metaphosphoric acid, polyphosphoric acid, methanesulfonic acid, ethanesulfonic acid, propanesulfonic acid, benzenesulfonic acid, toluenesulfonic acid, cumenesulfonic acid, alkyl benzenesulfonic acids, monoalkyl phosphoric acids, dialkyl phosphoric acids or their blends, and more preferably the acids present in the bath may be sulfuric acid, phosphoric acid or their blends.

The concentration of acid in the etching bath can be from 10% up to 98%, preferably between 40% and 95%, and more preferably between 55% and 92%, considering the total of acid contained in mass/mass percentage with the rest being Cr (III) complexes and water. This acid total may be made up of the mixture of two or more acids.

The use temperature of the etching bath may vary between 10°C and 95°C, more preferably between 15°C and 80°C, and even more preferably between 20°C and 75°C. To reach the working temperatures, the treatment tanks are heated or cooled until the ideal working temperature is maintained by applying any appropriate technology for that purpose.

The pieces of any shape and size of polymer to be treated in the etching bath are submerged in it for a period of time between 30 seconds and one hour and preferably between 1 minute and 45 minutes, or more preferably between 2 minutes and 30 minutes.

After the etching process referred to by this invention, the necessary washing stages are performed with water, aqueous solutions or organic liquids with characteristics known in the current prior art.

After the washing, the necessary processes are performed to obtain the metallic coating through a chemical bath with the required characteristics, through wet processes.

Alternatively, after the washing the pieces may or may not be dried if polymeric coatings such as varnishes or paint are going to be put on the treated pieces.

### EXAMPLES

The substrates used in the following examples are substrates obtained through injection of the corresponding thermoplastic polymer: ABS, ABS-polycarbonate, polyamide 6, polyamide 6 with 20% wollastonite inorganic load, polypropylene or polypropylene with 20% talc inorganic load.

Thermostable substrates are cured through methods known in the prior art; they are unsaturated polyester resin with 40% fiberglass and epoxy resin with 40% fiberglass.

In every case, the substrate is washed before etching. The washing is done by immersion in a bath of water, a bath of an aqueous solution of 1% sodium dodecyl sulphate and two later rinses by immersion in two water baths. The purpose of this washing is to remove the dirt and the grease from the substrates and/or to prepare the surface for etching. Depending on the process for preparing the pieces, this washing can be avoided.

The etching treatment is performed with the corresponding baths presented in the examples below.

After the etching process, two more rinses are performed by immersion in water baths.

Once the polymer is etched, autocatalytic electroless nickel, also known as electroless nickel, is deposited through a process known in the prior art:
Treatment by immersion in activator bath at 25°C for 2 minutes. Rinse in water bath. Treatment in accelerator bath at 25°C for 2 minutes. Rinse in water bath. Immersion bath for metallization of electroless nickel at 29°C for 8 minutes. Two washings by immersion in water bath.

Similarly, once the etching is performed and the substrates are dried, the polymer is covered with a coating of an organic base or paint.

### EXAMPLE 1:

As a reference about the results obtained in the etching process, the etching is performed in a bath based on the use of Cr (VI) salts with the following composition:
The etching bath contains 380 gr/L of chromic acid and 400 gr/L of concentrated sulfuric acid.

The pieces to be etched are placed in the bath for 3 minutes at a temperature of 25°C.

### EXAMPLE 2:

Etching bath based on Cr (III) salts, in which the ligand coordinated with the chromium is acetate and which is prepared through a solution of 62% H₂O; 4% chromium acetate (III); 34% H₂SO₄.

The pieces to be etched are placed in the bath for 3 minutes at a temperature of 25°C.

### EXAMPLE 3:

Etching bath based on Cr (III) salts, in which benzoate is the ligand coordinated with the chromium and which is prepared through a solution of 40% H₂O; 3% chromium benzoate (III); 57% methanesulfonic acid.

The pieces to be etched are placed in the bath for 3 minutes at a temperature of 25°C.

### EXAMPLE 4:

Etching bath based on Cr (III) salts, in which the ligand coordinated with the chromium is glycinate and which is prepared through a solution of 21% H₂O; 2.5% chromium glycinate (III); 65.5% H2SO4.

The pieces to be etched are placed in the bath for 3 minutes at a temperature of 25°C.

### EXAMPLE 5:

Etching bath based on Cr (III) salts, in which aminohexanoate is the ligand coordinated with the chromium and which is prepared through a solution of 21% H₂O; 2.2% CrCl₃-6H₂O; 1.3% aminohexanoic acid; 36.5% H₃PO₄ (of the 75% in water); 39% H₂SO₄.

The pieces to be etched are placed in the bath for 3 minutes at a temperature of 25°C.

### EXAMPLE 6:

Etching bath based on Cr (III) salts, in which the ligand coordinated with the chromium is citrate and which is prepared through a solution of 17% H₂O; 1.2% Cr(NO₃)₃.9H₂O; 2.6% citric acid; 39.7% H₃PO₄ (of the 75% in water); 39.5% H₂SO₄.

The pieces to be etched are placed in the bath for 3 minutes at a temperature of 25°C.

### EXAMPLE 7:

Etching bath based on Cr (III) salts, in which the ligand coordinated with the chromium is triethylenetetramine and which is prepared through a solution of 19% H₂O; 0.8% Cr(NO₃)₃.9H₂O; 1.1% triethylenetetramine; 38.4% H₃PO₄ (of the 75% in water); 40.7% H₂SO₄.

The pieces to be etched are placed in the bath for 3 minutes at a temperature of 25°C.

### EXAMPLE 8:

Etching bath based on Cr (III) salts, in which the ligand coordinated with the chromium is thiodipropionate and which is prepared through a solution of 18.5% H₂O; 0.7% CrCl₃-6H₂O; 0.9% thiodipropionic acid; 38% H₃PO₄ (of the 75% in water); 41.9% H₂SO₄; The pieces to be etched are placed in the bath for 3 minutes at a temperature of 25°C.

### EXAMPLE 9:

Etching bath based on Cr (III) salts, in which the ligand coordinated with the chromium is ethylenediaminetetraacetate (EDTA) and which is prepared through a solution of 18% H₂O; 0.6% Cr(NO₃)₃.9H₂O; 0.3% ethylenediaminetetraacetic acid; 39.7% H₃PO₄ (of the 75% in water); 41.4% H₂SO₄. The pieces to be etched are placed in the bath for 3 minutes at a temperature of 25°C.

### EXAMPLE 10:

Etching bath based on Cr (III) salts, in which the ligand coordinated with the chromium is ethylenediaminetetraacetate (EDTA) and which is prepared through a solution of 18.3% H₂O; 0.6% Cr(NO₃)₃.9H₂O; 0.5% disodium salt of ethylenediaminetetraacetic acid; 39.2% H₃PO₄ (of the 75% in water); 41.4% H₂SO₄. The pieces to be etched are placed in the bath for 3 minutes at a temperature of 25°C.

### EXAMPLE 11:

Etching bath based on Cr (III) salts, in which the ligand coordinated with the chromium is ethylenediaminetetraacetate (EDTA) and which is prepared through a solution of 18% H₂O; 0.6% Cr(NO₃)₃.9H₂O; 0.3% ethylenediaminetetraacetic acid; 39.7% H₃PO₄ (of the 75% in water); 41.4% H2SO4. The pieces to be etched are placed in the bath for 3 minutes at a temperature of 40°C.

### EXAMPLE 12:

Etching bath based on Cr (III) salts, in which the ligand coordinated with the chromium is ethylenediaminetetraacetate (EDTA) and which is prepared through a solution of 18% H₂O; 2% Cr(NO₃)₃.9H₂O; 1% ethylenediaminetetraacetic acid; 35.5% methanesulfonic acid (of the 75% in water); 43.5% H₂SO₄. The pieces to be etched are placed in the bath for 3 minutes at a temperature of 25°C.

### EXAMPLE 13:

Etching bath based on Cr (III) salts, in which the ligand coordinated with the chromium is fumarate and which is prepared through a solution of 18% H₂O; 0.6% Cr(NO₃)₃.9H₂O; 0.3% fumaric acid; 39.7% H₃PO₄ (of the 75% in water); 41.4% H₂SO₄. The pieces to be etched are placed in the bath for 3 minutes at a temperature of 25°C.

### EXAMPLE 14:

Etching bath based on Cr (III) salts, in which the ligand coordinated with the chromium is compound oxalate through a solution of 18% H₂O; 0.9% Cr(NO₃)₃.9H₂O; 0.6% oxalic acid H₂C₂O₄.2H₂O; 39.7% H₃PO₄; 40.8% H₂SO₄. The pieces to be etched are placed in the bath for 3 minutes at a temperature of 25°C.

### EXAMPLE 15:

Etching bath based on Cr (III) salts, in which the ligand coordinated with the chromium is compound oxalate through a solution of 17.7% H₂O; 1.2% Cr(NO₃)₃.9H₂O; 0.6% oxalic acid H₂C₂O₄.2H₂O; 39.7% H₃PO₄ (75%); 40.8% H₂SO₄. The pieces to be etched are placed in the bath for 15 minutes at a temperature of 25°C.

### EXAMPLE 16:

Etching bath based on Cr (III) salts, in which the ligand coordinated with the chromium is salicylate and which is prepared through a solution of 18% H₂O; 0.6% Cr₂O₃; 0.8% salicylic acid; 39.7% H₃PO₄ (of the 75% in water); 40.9% H₂SO₄. The pieces to be etched are placed in the bath for 3 minutes at a temperature of 25°C.

### EXAMPLE 17:

Etching bath based on Cr (III) salts, in which the ligand coordinated with the chromium is salicylate and which is prepared through a solution of 18% H₂O; 0.6% Cr2O3; 0.8% salicylic acid; 39.7% H₃PO₄ (of the 75% in water); 40.9% H₂SO₄. The pieces to be etched are placed in the bath for 3 minutes at a temperature of 60°C.

### EXAMPLE 18:

Etching bath based on Cr (III) salts, in which the ligand coordinated with the chromium is gluconate and which is prepared through a solution of 18% H₂O; 0.6% Cr₂(SO₄)₃-H₂O; 2% sodium gluconate; 38% H₃PO₄ (of the 75% in water); 41.4% H₂SO₄.

The pieces to be etched are placed in the bath for 3 minutes at a temperature of 25°C.

The metallized pieces undergo an adhesion test through the cross cut test (ISO 2409), which is one of the methods commonly used to determine adhesion of coatings on polymers. The adhesion result is scored from 0 to 5, with 0 being excellent adhesion and the peel method following standard DIN 53494.

The adhesion results of the metal layer obtained after the etching and metallization of the pieces are shown in the table below:

| BATH EXAMPLE | POLYMER | ISO 2409 | AVERAGE FORCE IN N/cm |
|---|---|---|---|
| Bath example 1 | ABS | 0 | 8.5 |
| Bath example 1 | ABS-polycarbonate | 0 | 4.3 |
| Bath example 1 | Polyamide 6 | 1 | 2.2 |
| Bath example 1 | Polyamide 6 with 20% wollastonite | 0 | 3.2 |
| Bath example 1 | Polypropylene | 4 | 0.4 |
| Bath example 1 | Polypropylene 20% talc load | 4 | 0.6 |
| Bath example 1 | Unsaturated polyester fiberglass | 1 | 2.1 |
| Bath example 1 | Epoxy fiberglass | 0 | 3.1 |
| Bath example 2 | ABS | 0 | 7.4 |
| Bath example 2 | ABS-polycarbonate | 0 | 3.8 |
| Bath example 3 | ABS | 0 | 8.1 |
| Bath example 3 | ABS Polycarbonate | 0 | 4.2 |
| Bath example 4 | ABS | 0 | 7.9 |
| Bath example 4 | ABS Polycarbonate | 0 | 4.4 |
| Bath example 4 | Polyamide 6 | 2 | 1.6 |
| Bath example 4 | Polyamide 6 with 20% wollastonite | 1 | 2.5 |
| Bath example 5 | Unsaturated polyester fiberglass | 2 | 1.3 |
| Bath example 5 | Epoxy fiberglass | 0 | 4.7 |
| Bath example 6 | ABS | 0 | 7.3 |
| Bath example 7 | ABS | 0 | 6.9 |
| Bath example 8 | ABS | 0 | 6.6 |
| Bath example 9 | Polypropylene 20% talc | 3 | 0.9 |
| Bath example 10 | Polypropylene 20% talc | 3 | 0.8 |
| Bath example 11 | Polypropylene 20% talc | 4 | 0.6 |
| Bath example 12 | Polypropylene 20% talc | 4 | 0.5 |
| Bath example 13 | ABS | 0 | 8.2 |
| Bath example 14 | ABS | 0 | 8.0 |
| Bath example 14 | ABS Polycarbonate | 0 | 4.9 |
| Bath example 14 | Polyamide 6 with 20% wollastonite | 0 | 3.7 |
| Bath example 14 | Polypropylene 20% talc load | 3 | 1.0 |
| Bath example 15 | ABS | 0 | 7.9 |
| Bath example 16 | ABS | 0 | 7.5 |
| Bath example 17 | ABS | 0 | 7.5 |
| Bath example 18 | ABS | 0 | 7.7 |

The pieces coated with paint or organic coating are prepared after the bath treatment by drying in an air current at 40°C for 2 hours and are then coated with an airbrush. The paint used is a standard kind called 100% solids based on triethylene glycol diacrylate and UV curing that is applied following the manufacturer's recommendations.

Adhesion results of the paint that underwent the ISO2409 test:

| BATH EXAMPLE | POLYMER | ISO 2409 |
|---|---|---|
| Bath example 1 | Polypropylene 20% talc | 3 |
| Bath example 2 | Polypropylene 20% talc | 3 |
| Bath example 3 | Polypropylene 20% talc | 3 |
| Bath example 10 | Polypropylene 20% talc | 3 |
| Bath example 11 | Polypropylene 20% talc | 3 |

## Claims

1. Use of a formulation of acid etching of polymeric materials, including thermoplastics, thermostables or elastomers, through a chemical process based on the use of Cr (III) coordination complexes and the purpose of which is to metallize them through the application of chemical baths or organic coating. The concentration of acid in the etching bath can be from 10% up to 98%.

2. Use of a formulation of acid etching baths of polymeric materials to then metallize or organically coat them according to claim 1, in which the chromium (III) complex is based on the use of at least one or several mono, bi, tri, tetra, penta, hexadentate or bridging ligands that coordinate to the chromium through the oxygen, sulfur or nitrogen atom or through several of these atoms.

3. Use of a formulation according to claim 2, in which the ligands are found among formate, acetate, propanoate, butanoate, benzoate, phenyl acetate, phenyl propionate, cyanamate, alkyl benzoate, pyruvate, levulinate, citrate, isocitrate, aconitate, trimellitate, glycinate, valinate, leucinate, treoninate, lysinate, tryptophanate, hystidanate, phenly alaninate, isoleucinate, argininate, metioninate, alaninate, prolinate, serinate, cysteinate, asparaginate, glutaminate, tyrosinate, aspartate, polyaspartate, glutamate, cysteinate, homocysteinate, ornitinate, nicotinate, oxalate, propanodioate, butanedioate, pentanodioate, hexanodioate, maleate, fumarate, phthalate, isophthalate, terephthalate, tartrate, itaconate, mesaconate, citraconate, glycolate, lactate, mandelate, salicylate, gluconate, ethylenediaminetetracetate, nitrilotriacetate, iminodisuccinate, ethylenodiamine disuccinate, methylglycinediacetate, N,N, glutamate diacetate, cyclohexylenedinitrilotetraacetate, diethylenotriamainapentaacetate, aminoethylethylenglicoltetraacetate, tryethylentetraminahexaacetate, dihydroxiethylglycinate, iminodiacetate, oxamate, nitrilotripropionate, ethylenodiaminedipropionate, thiodipropionate, dithiodipropionate, aminopropanoate, aminopentanoate, aminohexanoate, 2-aminobenzoate, 3-aminobenzoate, 4-aminobenzoate, 3-cyclohexilamine-propylamine, ethylenodiamine, 1,3-diaminopropane, dimethylaminopropilamine, diethylaminopropilamine, bis(3-aminopropyl)-methylamine, diethylenotriamine, dipropylenotraimine, triethylenetetramine, tetraethylenopentamine, polyamines, 3-(2-aminoethyl)amino-propilamine, N,N'-bis(3-aminopropyl)ethylenodiamine, neopentante diamine, cyclohexanodiamine, hexano-1,6-diamine, imidazole, 1-methylimidazole, 2-methylimidazole, 1,2-dimethylimidazole, 2-ethylimidazole, 2-ethyl-4-methyl-imidazole, N-(3-Aminopropyl)-imidazole, pyrazole, nicyanamide, bipyridine, phenanthroline, preferably: formate, acetate, propionate, glycinate, argininate, aspartate, polyaspartate, glutamate, nicotinate, oxalate, propanedioate, butanedioate, pentanedioate, hexanedioate, maleate, fumarate, phthalate, salicylate, tartrate, citrate, glycolate, lactate, gluconate, ethylenediaminetetracetate, nitrilotriacetate, 2-aminobenzoate, MORE PREFERABLY oxalate, propanedioate, butanedioate, maleate, fumarate, phthalate, glycolate, lactate, salicylate, glycinate, glutamate or their blends.

4. Use of a formulation according to claims 1 to 3, in which the concentration of Cr (III) complex present is in the range of 2 mM to 2 M and more preferably between 5 mM and 1 M, and even more preferably between 0.01 M and 0.4 M.

5. Use of a formulation of acid etching for the metallization or organic coating of polymeric materials according to claims 1 to 4 in which the acids can be sulfuric acid, aminosulfuric (sulfamic) acid, phosphoric acid, diphosphoric acid, metaphosphoric acid, polyphosphoric acid, methanesulfonic acid, ethanesulfonic acid, propanesulfonic acid, benzenesulfonic acid, toluenesulfonic acid, cumenesulfonic acid, alkyl benzenesulfonic acids, monoalkyl phosphoric acids, dialkyl phosphoric acids, isethionic acid, perchloric acid, chloric acid, nitric acid, tryfluorometasulfonic acid, trifluoracetic acid, tetrafluoroboric acid, hexafluorophosphoric acid, hexafluorosilicic acid, hydrogen fluoride acid, boric acid or their blends; preferably sulfuric acid, aminosulfuric (sulfamic) acid, phosphoric acid, diphosphoric acid, metaphosphoric acid, polyphosphoric acids, methanesulfonic acid, ethanesulfonic acid, propanesulfonic acid, benzenesulfonic acid, toluenesulfonic acid, cumenesulfonic acid, alkyl benzenesulfonic acids, monoalkyl phosphoric acids, dialkyl phosphoric acids or their blends and, more preferably, sulfuric acid, phosphoric acid or their blends.

6. Use of a formulation of acid etching for the metallization or coating of polymeric materials according to claims 1 to 5, in which the percentage by weight of acids is between 20% and 98%, more preferably between 40% and 95%, and even more preferably between 55% and 92%.

7. Use of a formulation according to claims 1 to 6, in which the working temperature is between 10°C and 95°C, more preferably between 15°C and 80°C, and even more preferably between 20°C and 70°C.

8. Use of a formulation according to claims 1 to 7, in which the etching time is between 30 seconds and 1 hour, more preferably between 1 minute and 45 minutes, and even more preferably between 2 minutes and 30 minutes.

9. Use of the formulation of claims 1 to 8 in which the organic coating of polymeric materials is through paint, varnish or other organic coating.
